(19) Europäisches Patentamt

European Patent Office

Office européen des brevets

(11) Veröffentlichungsnummer: **0 189 559**
**B1**

(12) **EUROPÄISCHE PATENTSCHRIFT**

(45) Veröffentlichungstag der Patentschrift: **06.06.90**

(21) Anmeldenummer: **85115449.2**

(22) Anmeldetag: **05.12.85**

(51) Int. Cl.⁵: **B 23 K 7/10**

(54) **Brennschneidmaschine.**

(30) Priorität: **24.12.84 DE 3447304**

(43) Veröffentlichungstag der Anmeldung:
**06.08.86 Patentblatt 86/32**

(45) Bekanntmachung des Hinweises auf die
Patenterteilung:
**06.06.90 Patentblatt 90/23**

(84) Benannte Vertragsstaaten:
**FR GB IT**

(56) Entgegenhaltungen:
**DE-A-3 421 885**

**MITTEILUNGEN DER BEFA, 24. Jahrgang, Nr. 5,
1973, Seiten 1-7, Knapsack; H. HIRSCHBERG
"Wirtschaftliches Brennschneiden mit Hilfe
moderner Brennschneidmaschinen"
WERKSTATTTECHNIK, Band 73, Nr. 8, August
1983, Seiten 491-496, Würzburg; M. GÖRKE et
al.: "Eindrücke von der Europäischen
Werkzeugmaschinen-Ausstellung 5. EMO 1983
in Paris"**

(73) Patentinhaber: **MESSER GRIESHEIM GMBH
Hanauer Landstrasse 330
D-6000 Frankfurt/Main (DE)**

(72) Erfinder: **Nicolai, Manfred, Dr.
Wienerstrasse 60
D-6100 Darmstadt (DE)**
Erfinder: **Derse, Josef, Dr.
Platanenring 45
D-6458 Rodenbach 1 (DE)**

(56) Entgegenhaltungen:

**G. HERDEN "Schweiss- und Schneidtechnik",
1960, VEB Carl Marhold Verlag. Halle (Saale)
DEUTSCHE NORMEN, DIN 8543, Teil 2, Juni
1981, Seiten 1-10, "Benner für die
Autogentechnik"**

## Beschreibung

Die Erfindung betrifft eine Brennschneidmaschine nach dem Oberbegriff des Anspruchs 1.

Die zum Fertigen eines Werkstückes auf einer solchen Brennschneidmaschine benötigte Auftragszeit setzt sich aus einer Rüstzeit und einer Ausführungszeit zusammen. Die Rüstzeit an der Brennschneidmaschine besteht im wesentlichen im Vorbereiten der Maschine zum Brenn- oder Plasmaschneiden. Dazu zählen u. a. das Einsetzen der Düsen entsprechend der zu schneidenden Blechdicke, das Einstellen der zugehörigen Drücke von Heizgas, Heizsauerstoff und Schneidsauerstoff sowie das Positionieren des Brenners auf den Schnittbeginn. Die Ausführungszeit setzt sich aus der Hauptzeit und der Nebenzeit zusammen. Die Hauptzeit dient dem unmittelbaren Arbeitsfortschritt, nämlich dem Ausscheiden der Werkstücke. In der Nebenzeit werden die Werkstücke aufgelegt und abgeräumt.

Es ist beim Brennschneiden bekannt, durch die Verwendung von beispielsweise Hochleistungsdüsen, die ein Erhöhen der Brennschneidgeschwindigkeit eit bis über 30% bewirken, die Hauptzeiten zu senken -siehe auch Mitteilungen der BEFA, 24. Jahrgang, Nr. 5, 1973, Seiten 1 bis 7, Knapsack, H. Hirschberg, "Wirtschaftliches Brennschneiden mit Hilfe moderner Brennschneidmaschinen".

Der Erfindung liegt die Aufgabe zugrunde, die Rüstzeiten sowie den personalbedarf an Brennschneidmaschinen zu verringern und gleichzeitig die Schnittgüte beim Brennschneiden zu erhöhen.

Diese Aufgabe wird bei einer gattungsgemäßen Einrichtung durch die kennzeichnenden Merkmale des Anspruchs 1 gelöst.

Weiterbildungen der Erfindung sind in den Unteransprüchen angegeben.

Die mit der Erfindung erzielten Vorteile bestehen insbesondere in der Erhöhung der Einschaltdauer der Brennschneidmaschine. Hinzu kommt, daß durch das automatische Wechseln der Oüsen bei Verschleiß und/oder Werkstückdickenänderungen und/oder Heizgasänderung das Bedienungspersonal nicht mehr an bzw. in dem thermisch belasteten Arbeitsbereich diesen Arbeitsvorgang ausführen muß.

Nachfolgend wird ein Ausführungsbeispiel für die erfindungsgemäße Brennschneidmaschine beschrieben.

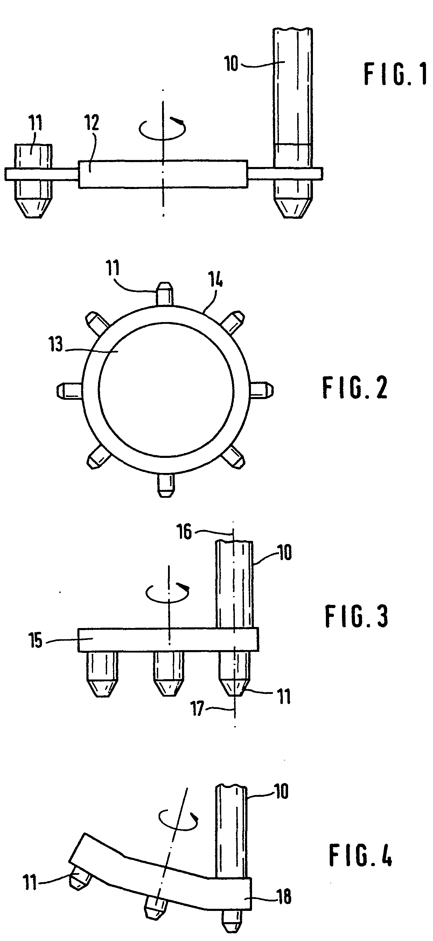

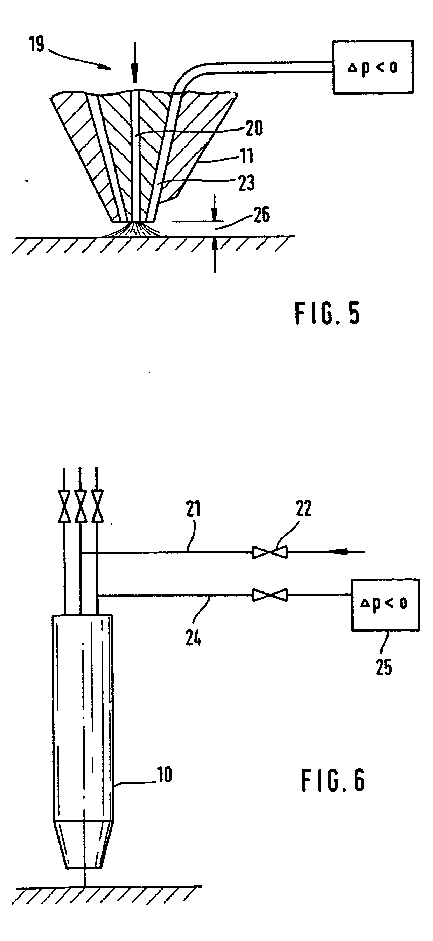

In den Figuren 1 bis 4 sind mehrere Ausbildungen der Düsenwechselstation und in den Figuren 5 und 6 eine Ausbildung der Düsenprüfstation als Gasschaltung schematisch dargestellt.

Die Brennschneidmaschine, wie sie von der Anmelderin beispielsweise unter dem Namen Omnimat vertrieben wird, besteht im wesentlichen aus einem Portal, an dem zwei Unterwagen befestigt sind. In den Unterwagen befinden sich die vollständigen Antriebsaggregate für die Längsbewegung des Portals. Hierzu sind die Unterwagen auf Laufschienen verfahrbar angeordnet. Am Querträger des portals sind ferner Querantriebswagen vorgesehen, die mit Antriebsmotoren zum Bewegen der Antriebswagen in Verbindung stehen. An den Antriebswagen ist je ein die Schneidbrenner 10 tragendes Brenneraggregat befestigt.

Der Schneidbrenner ist dabei vorzugsweise als Autogenmaschinenschneidbrenner ausgebildet, dessen Schneiddüse 11 auswechselbar mit dem Brenner verbunden ist.

Die mit einer derartigen Brennschneidmaschine geschnittenen Blechdicken liegen im wesentlichen zwischen 5 und 50 mm. Für diesen Bereich sind drei Schneiddüsen erforderlich, nämlich 5 - 10 mm, 10 - 25 mm und 25 - 50 mm.

In einem vorzugsweise an der Brennschneidmaschine befestigten Düsenmagazin sind eine Mehrzahl dieser Düsen 11 mit gleicher und/oder unterschiedlicher Gasdurchsatzgeometrie angeordnet, mit denen der Brenner entsprechend den zu schneidenden Blechdicken ausgerüstet werden kann. Dabei ist das Düsenmagazin vorzugsweise als Kettenmagazin ausgebildet, das seitlich an der Brennschneidmaschine angeordnet ist. Die Brennschneidmaschine und das Düsenmagazin bilden vorzugsweise eine konstruktive Einheit, die an eine NC-Steuerung angeschlossen und im Verfahrbereich der Brennschneidmaschine angeordnet sind. Die Bereitstellung der jeweils "richtigen" Düse im Düsenmagazin und der Düsenwechsel wird von der NC-Steuerung entsprechend dem Bearbeitungsprogramm gesteuert.

Der Düsenwechsel erfolgt über eine automatische Düsenwechselstation, die vorzugsweise aus einem Doppelgreifer 12 besteht, der gleichzeitig die Düse aus dem Düsenmagazin und die Brennerdüse greift, anschließend die beiden Düsen entnimmt, dann um 180° gedreht wird und die neue Düse in den Brenner einsetzt sowie die Brennerdüse in dem Düsenmagazin ablegt und somit den Wechselvorgang, alte gegen neue Düse ausführt.

Um vorteilhaft eine einfache und billige Düsenwechselstation zu schaffen, in der keine Kodierung der Düsen erforderlich ist, wird nach einem weiteren Ausführungsbeispiel nach der Erfindung die Düsenwechselstation als Schaltmagazin 13 in Form eines Sternrevolvers (Fig. 2) ausgebildet, in dem die Düsen 11 in fester Reihenfolge angeordnet sind. Vorteilhaft wird bei diesem Schaltmagazin 13 der die Düsen tragende Düsenring 14 geschaltet.

In Fig. 3 und Fig. 4 sind weitere Ausführungsbeispiele von einer Düsenwechselstation als Schaltwechselstationen schematisch dargestellt, wobei Fig. 3 eine in Form eines Trommelrevolvers ausgebildete drehbare Düsenplatte 15 zeigt, auf der die Düsen 11 kreisförmig angeordnet sind. Beim Wechseln wird die Brennerachse 16 immer auf die Mittelachse 17 des Kreisringes verfahren. Anschließend wird die Düsenplatte 15 gedreht, bis die neue Düse unter dem Brenner 11 steht.

Mit dem in Fig. 4 schematisch dargestellten schrägstehenden Revolver 18 werden vorteilhaft größere Arbeitsräume während des Brennschneidens erzielt.

Vorzugsweise ist in der Servicestation neben dem Düsenmagazin und der Düsenwechselstation eine Düsenprüfstation angeordnet, die in einer vorzugsweisen Ausgestaltung aus einer Fernsehkamera besteht. Die Schneidbrenner werden dabei in hinreichend engen Zeitabständen vor die Fernsehkamera gefahren, wobei die Prüfung der Düsen über das Flammenbild erfolgt. Das von der Fernsehkamera ermittelte Flammenbild des Schneidbrenners wird mit einem in der NC-Steuerung abgelegten Flammenbild verglichen. Werden dabei aufgrund von Verschleißerscheinungen an der Düse Differenzen oberhalb einer klassifizierten Flammenbildabweichung zwischen dem abgelegten Flammenbild und dem ermittelten Flammenbild festgestellt, wird der Brenner mit der beanstandeten Düse zu einer Düsenreinigungsstation verfahren. In der Düsenreinigungsstation wird die Düse von Schneidspritzern etc. gereinigt und zu einer erneuten Prüfung vor der Fernsehkamera verfahren.

Stimmt nach der Reinigung der Düse das Flammenbild weiterhin nicht mit dem im Speicher abgelegten Flammenbild überein, erfolgt ein automatischer Wechsel der Düse.

Nach einem weiteren Ausführungsbeispiel (Fig. 5 und Fig. 6) der Erfindung besteht die in der Servicestation angeordnete Düsenprüfstation aus einer am Brenner 10 angeordneten Gasschaltung 19. Diese an den Brenner angeschlossene Gasschaltung besteht aus einer an dem Schneidsauerstoffkanal 20 angeschlossenen Druckluftleitung 21 mit Einstellund Verschlußventil 22 sowie einer an den Heizgas Heizsauerstoffkanal 23 angeschlossene Meßleitung 24. In der Meßleitung 24 ist ein Druckmeßgerät 25 angeordnet.

Zur Prüfung der Düse fährt man den Brenner mit der Schneiddüse in einem definierten Abstand 26 zu einer vorzugsweise planen Oberfläche. Anschließend öffnet man das in der Meßleitung angeordnete Ventil und schickt Druckluft durch den Schneidsauerstoffkanal. Der sich hierbei einstellende Druckabfall im Heizsystem (Heizgas-Heizsauerstoffkanal) wird mittels des Druckmeßgerätes gemessen. Bei verschleißund beschädigungsfreien Schneiddüsen (nicht beschädigte Düsenquerschnitte) stellt sich in einem definierten Meßvolumen in einer definierten Zeit ein bestimmter Unterdruck ein.

## Patentansprüche

1. Brennschneidmaschine mit einer Steuerung zum numerischen Steuern von Brennschreidmaschinenantrieben und mindestens einem, eine auswechslbare Schneiddüse (11) aufweisenden Schneidbrenner, der mittels der numerisch gesteuerten Antriebe verfahrbar ist, dadurch gekennzeichnet, daß der Schneidbrenner (10) zu einer im Verfahrbereich der Brennschneidmaschine angeordneten Düsenwechselstation (12, 13, 15, 18) verfahrbar ist, in der ein Düsenmagazin mit Ersatzdüsen mit gleicher oder unterschiedlicher Gasdurchsatzgeometrie angeordnet ist und in welcher ein automatisches Wechseln der Düsen (11) bei festgestelltem Verschleiß und/oder Werkstückdickenänderungen und/oder Heizgasänderungen ausgeführt wird.

2. Brennschneidmaschine nach Anspruch 1, dadurch gekennzeichnet, daß der Schneidbrenner (10) zu einer im Verfahrbereich der Brennschneidmaschine angeordneten Düsenprüfstation und/oder Düsenreinigungsstation verfahrbar ist, in denen der Schneiddüsenverschleiß festgestellt wird und/oder die Schneiddüsen gereinigt werden.

3. Brennschneidmaschine nach Anspruch 1, dadurch gekennzeichnet, daß in der Düsenprüfstation eine Fernsehkamera zur Prüfung der Düsen über das Flammenbild befestigt ist.

4. Brennschneidmaschine nach Anspruch 1 oder 2, dadurch gekennzeichnet, daß an dem Brenner eine Gaseschaltung für die Verschleißprüfung derart angeschlossen ist, daß bei einem definierten Abstand über einer planen Oberfläche aus dem Schneidsauerstoffkanal austretenden Druckluftstrahl sich bei verschleißfreier Düse in einem definierten Meßvolumen in einer definierten Zeit ein bestimmter Unterdruck in dem Heizgas-/Heizsauerstoffkanal einstellt.

## Revendications

1. Machine d'oxycoupage comportant une commande numérique des moyens d'entraînement de la machine ainsi que d'au moins un chalumeau d'oxycoupage muni d'une buse de découpage (11) interchangeable, chalumeau qui est déplacé par des moyens d'entraînement à commande numérique, machine caractérisée en ce que le chalumeau (10) peut être déplacé jusqu'à un poste de remplacement de buses (12, 13, 15, 18) prévu dans la zone de déplacement de la machine d'oxycoupage, poste dans lequel se trouve un magasin à buses avec des buses de remplacement ayant une géométrie de passage de gaz identique ou différente et dans laquelle se fait un changement automatique des buses (11) lorsque de l'usure est constatée et/ou en cas de changement d'épaisseur de la pièce et/ou de modification du gaz de chauffage.

2. Machine d'oxycoupage selon la revendication 1, caractérisée en ce que le chalumeau d'oxycoupage (10) peut être transféré vers un poste de contrôle de buses placé dans la zone de déplacement de la machine d'oxycoupage et/ou à un poste de nettoyage de buses dans lesquels on détermine l'usure de la buse et/ou on nettoie la buse.

3. Machine d'oxycoupage selon la revendication 1, caractérisée par une caméra de télévision équipant le poste de contrôle des buses pour vérifier les buses par leur image de la flamme.

4. Machine d'oxycoupage selon la revendication 1 ou 2, caractérisée par un circuit de gaz prévu sur le brûleur pour un contrôle d'usure de manière qu'à une distance déterminée au-dessus d'une surface plane, le jet d'air comprimé sortant du canal d'oxygène de coupage établisse dans le cas d'une buse sans usure, et dans un volume de mesure déterminé, une dépression définie dans le canal d'oxygène de chauffage/gaz de chauffage pendant l'intervalle de temps déterminé.

## Claims

1. Flame-cutting machine with a control for numerically controlling flame-cutting machine drives and at least one cutting torch, having a replaceable cutting nozzle (11), which can be moved by means of the numerically controlled drives, characterized in that the cutting torch (10) can be moved to a nozzle-exchange station (12, 13, 15, 18) arranged in the range of movement of the flame-cutting machine, in which station is arranged a nozzle cartridge with replacement nozzles having identical or different gas flow rate geometry and in which, when wear has been detected and/or with changes in the thickness of the workpiece and/or changes in the heating gas, an automatic exchange of the nozzles (11) takes place.

2. Flame-cutting machine according to Claim 1, characterized in that the cutting torch (10) can be moved to a nozzle-checking station and/or nozzle-cleaning station, arranged in the range of movement of the flame-cutting machine, in which stations the wear on the cutting nozzles is detected and/or the cutting nozzles are cleaned.

3. Flame-cutting machine according to Claim 1, characterized in that a television camera is fastened in the nozzle-checking station for checking the nozzles using the flame pattern.

4. Flame-cutting machine according to Claim 1 or 2, characterized in that a gas circuit for testing for wear is connected to the torch in such a way that, at a given distance above a plane surface, a certain underpressure is set up in the heating-gas/heating-oxygen duct, with a nozzle free of wear, from the jet of compressed air issuing from the cutting-oxygen duct in a given measuring volume in a given time.

10

FIG. 1

11  12

11  14

13

FIG. 2

16

10

15

FIG. 3

11

17

10

FIG. 4

11

18

1

FIG. 5

FIG. 6